Europäisches Patentamt

European Patent Office

Office européen des brevets

(11) Publication number: **0 419 067 A2**

# EUROPEAN PATENT APPLICATION

(21) Application number: 90309469.6

(51) Int. Cl.5: **G06F 13/12, G06F 13/38**

(22) Date of filing: 30.08.90

(30) Priority: **21.09.89 US 410451**

(43) Date of publication of application:
**27.03.91 Bulletin 91/13**

(84) Designated Contracting States:
**DE FR GB**

(71) Applicant: **International Business Machines Corporation**
**Old Orchard Road**
**Armonk, N.Y. 10504(US)**

(72) Inventor: **Krantz, Jeffrey Isaac**
**18262, 104th Terrace South**
**Boca Raton, Florida 33498(US)**
Inventor: **Williams, Robert Lynn**
**1194 South West 27th Avenue**
**Bynton Beach, Florida 33426(US)**

(74) Representative: **Burt, Roger James, Dr.**
**IBM United Kingdom Limited Intellectual**
**Property Department Hursley Park**
**Winchester Hampshire SO21 2JN(GB)**

(54) **Computing system having apparatus for conducting serial port extended buffering exploitation using a protocol overide mechanism.**

(57) There is disclosed a method of conducting input/output of data in a serial manner. The input/output of data is controlled by a buffering controlled processor at the I/O port. In accordance with the method, the control buffering of the I/O of data is overridden to determine if a connected peripheral has greater buffering capabilities than that of the I/O port processor. If so, the override is maintained.

FIG. 2

## COMPUTING SYSTEM HAVING APPARATUS FOR CONDUCTING SERIAL PORT EXTENDED BUFFERING EXPLOITATION USING A PROTOCOL OVERRIDE MECHANISM

The present invention relates to a computer system and particularly to a computer system having apparatus for exploiting serial port extended buffering by using a protocol override mechanism for devices having protocol based upon character at a time processing.

When discussing serial port data transmission, it is generally intended to mean conventional serial port data transmission such as is conducted through what is known in the industry as an RS232C port (IEEE Standard). These ports allow the input and output of data in a serial or bitstream fashion. Typically, traditional UARTs (Universal Asynchronous Receiver Transmitter) that support RS232C interface hardware are capable of only buffering a single character for output and a single character for input at a time. Examples of devices which are attached to serial ports in computer systems typically include printers, plotters, and modems, although this list is not all inclusive and is not limited to only those devices listed.

In the case where single-tasking, or more commonly as now known, single-threaded software, such as PC DOS, as well as PC DOS applications such as commercially available hypervisor software, is employed for such serial port processing, this single character buffering does not present a problem. More specifically, single-tasking software, e.g., single-tasking operating systems, typically use polling techniques to read/write the port one character at a time. Since only a single task is being conducted, this does not present a problem.

On the other hand, in present day operating systems where multi-tasking is becoming more common, such as in multi-threaded software such as OS/2 which is commercially available from IBM Corporation (OS/2 is a trademark of IBM Corporation), an interrupt mechanism is employed on each character to drive the port and this presents significant resource consumption allocation problems. By resource consumption problems is meant that an excessive amount of processor time is spent servicing communication interrupts. It should be noted that the terms "task" and "thread" in referring to single-thread and multi-thread operating systems are used interchangeably, the term "thread" being what is commonly known in the art as a "task" when referring to the presently commercially available IBM OS/2 operating system.

In a multi-tasking environment, with high baud rates, such as 19.2K baud which is typically employed, this means that a port in a full duplexed mode may generate interrupts about every 250 microseconds. This requirement of generating an interrupt on every character severely limits the number of ports and aggregate baud rates that can be supported in such a multi-tasking operating system.

To address this problem, new hardware with extended buffering, i.e., FIFO, or First-In First-Out buffer, capability has been developed. The problem arises in that many peripheral devices that use serial ports have implemented buffering protocols that assume the system will process I/O one character at a time.

An aim of the present invention is to provide a computer system having apparatus for permitting the maximum exploitation of the new device extended buffering capability while remaining compatible with devices that use existing protocols.

In accordance with the present invention, there is now provided a method of conducting input/output of data in a serial manner, in a multi-tasking operating system which employs interrupts on each character of data to drive a serial port. The input/output of data is controlled by buffering controlled by processing means controlling the input/output of the data. Traditional processing means in the UART environment generate interrupts on every character. Newer, presently-commercially available, UART processing means have greater buffering capabilities which allow buffering interrupts to occur less frequently. An example of such a newer UART processing means is typically an NS16550A chip, commercially available from National Semiconductor Co., which provide character transfer into a buffer in increments typically of 16 bytes.

The method of the present invention preferably comprises the steps of disabling (overriding) and/or minimizing (not overriding) the control buffering which is typically conducted by the processing means. By minimizing is meant setting the receive buffer trigger level at a single character and only transmitting a single character at a time, and in this document the terms "minimizing" and "not overriding" are used interchangeably and mean the same thing. Likewise, the terms "disabling" and "overriding" are also used interchangeably and mean the same thing. A test output or input of serial data is conducted to a predetermined connected peripheral device while overriding the control buffering, for example, a printer, to determine if the connected peripheral device is capable of extended serial data buffering greater than the buffering capabilities of the processing means. Depending on the results, the buffering control is re-enabled when the capabilities of the peripheral to perform extended serial data buffering is determined to be about equal to or less than the buffering capabilities of the processing means. Alternatively, the buffering control is maintained disabled if the capabilities of the peripheral to perform extended serial data buffering is greater than the buffering capabilities of the processing means.

Viewing the present invention from a second aspect, there is now provided a computer system comprising: a serial port for permitting serial input and output of data, a multi-tasking operating system for generating interrupts to drive the serial port, means for conducting the input and output of data including processing means for providing controlled buffering of the input and output of data; characterised in that the computer system further comprises: disabling means for selectively disabling the controlled buffering by the processing means whereby rate of data input and output can be increased to a peripheral connectable to the system having extended serial buffering capability greater than the buffering capability of the processing means which is connected to the means for conducting input and output of data when the peripheral is connected thereto.

Viewing the present invention from a third aspect, there is now provided a computer system comprising: a serial port for permitting serial input and output of data, a multi-tasking operating system for generating interrupts to drive the serial port, means for conducting the input and output of data including processing means for providing controlled buffering of the input and output of data; characterised in that the computer system further comprises: enabling means for enabling buffering by the processing means by setting a predetermined interrupt trigger level equivalent to single character processing to reduce the probability of data loss during increase interrupt latency conditions.

Viewing the present invention from a fourth aspect, there is now provided, in or for a computer system comprising: a serial port for permitting serial input and output of data, a multi-tasking operating system for generating interrupts to drive the serial port, and means for conducting the input and output of data including processing means for providing controlled buffering of the input and output of data;

a method for conducting the data input and output comprising the steps of: disabling the controlled buffering provided by the processing means; conducting a test output of serial data to a predetermined connectable peripheral for determining if the connectable peripheral when connected is capable of extended serial data buffering greater than the buffering capabilities of the processing means; and

one of re-enabling the buffering control if the capabilities of the peripheral to perform extended serial data buffering is about equal to or less than the buffering capabilities of the processing means,

or maintaining the disabled buffering control if the capabilities of the connectable peripheral to perform extended serial data is buffering greater than the buffering capabilities of the processing means.

In another aspect, the present invention is directed to an improvement in a computer system having means for conducting input/output of data in a serial manner. The computer system is controlled by a multi-tasking operating system which employs interrupts to drive a serial port. The means for conducting input/output of data includes processing means for controlled buffering of the input/output of the data. The improvement resides in the provision of disabling means for selectively disabling the controlled buffering by the processing means whereby the input/output rate of data can be increased to a peripheral having extended serial buffering capability greater than the buffering capability of the processing means which is connected to the means for conducting input/output of data.

More specifically, based upon a command from an application, subsystem, or end user utility, the device driver for the serial port input/output will use the extended buffering capabilities of the peripheral hardware to its maximum benefit regardless of whether the device driver is

(1) enabled for automatic transmit flow control,

(2) enabled for output handshaking using any modem controlled signals, or

(3) enabled for input sensitivity using a standard DSR (Data Set Ready) signal. This overrides the control buffering which is typically conducted by the processing means.

Under present technology, the extended hardware buffering capabilities available due to the current hardware plans of numerous companies applies to the new RS232C hardware technology being placed in, for example, presently commercially available IBM workstations and serial adapters. Examples of such devices include the commercially available IBM PS/2 workstations as well, with respect to the serial adapters, those adapters commercially available which employ the National Semiconductor 16550A UART, or equivalent, such as is available from IBM Corporation. When employed to its maximum benefit, 16 characters can be given to the transmit hardware during the processing of one transmitter empty interrupt. Further, a 16 character receive buffer is available with a settable trigger level. The trigger level determines when the receive hardware will generate a "receive data ready interrupt".

When the hardware with this extended buffering capabilities is being used to its maximum benefit, the number of system interrupts are significantly reduced and the possibility of a receive or transmit data hardware overrun is significantly reduced.

In order to implement the system compatibly, when output handshaking using DSR (Data Set Ready), CTS (Clear To Send), or DCD (Data Carrier Detect) is enabled, the device driver will normally cause the

3

hardware with extended buffering capabilities to still generate an interrupt for every character that needs to be transmitted. By requesting the device driver to override this normal buffering control processing, the potential transmit throughput of the system is significantly increased, the system has significantly more processing power available for other activities (for high baud rates), and more communication ports are supportable at a given baud rate. In this description, the term "override" when used to refer to the buffering control is intended to mean modification of the buffering control to maximise the utilisation of the buffering capability of the peripheral device without totally disabling the flow control processing of the system.

A preferred embodiment of the present invention will now be described with reference to the accompanying drawings in which:

Fig. 1 is a block diagram illustrating the relationship between an asynchronous device driver (which executes on the system processor) and the asynchronous FIFO UART in accordance with this disclosure;

Fig. 2 is a system block diagram depicting the relationship of device driver software components containing the improvement within the rest of the system;

Fig. 3A is a flow diagram showing the two primary paths for output depending upon if output handshaking is enabled or disabled;

Fig. 3B is a flow diagram showing the same control flow as Fig. 3A with the addition of the invention as part of the flow;

Fig. 4A is a flow diagram showing the two primary paths for input sensitivity to a Data Set Ready (DSR) modem control signal;

Fig. 4B is a flow diagram showing the invention wherein the control flow is the same if input sensitivity is disabled, or if input sensitivity is enabled but the override is disabled;

Fig. 5A is a flow diagram showing two primary paths for Automatic Transmit Flow Control (also known in the art as XON/XOFF character flow control); and

Fig. 5B is a flow diagram showing that the control flow is the same if flow control is disabled, or if flow control is enabled but override is disabled.

For purposes of discussing the invention, it is noted that a FIFO is a First-In First-Out buffer. The size of a FIFO can vary. In this example the size of the FIFO is 16 bytes. Further, as defined herein, a UART is a Universal Asynchronous Receiver Transmitter, as previously discussed. The UART has two FIFOs. One for receive data and one for transmit data. These devices are conventional and well-known to those of ordinary skill in this art.

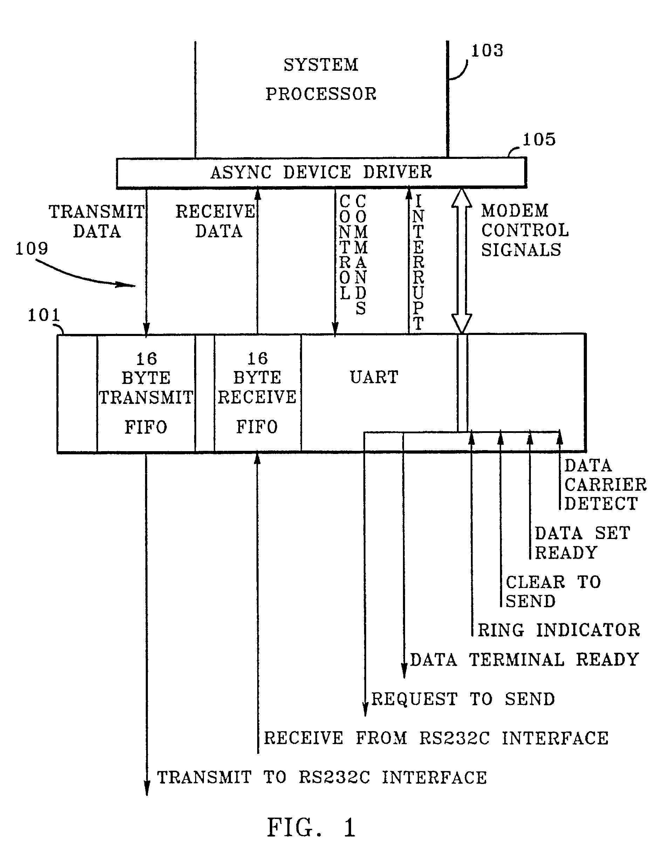

The major logical ways in which the asynchronous (async) device driver interacts with the UART 101 is shown by the arrows 109 in the Fig. 1. The asynchronous (async) device driver 105 sends transmit data to the UART 101 by writing data to an input/output port on the UART 101. The data will normally flow over the system data bus that connects the system processor to the input/output devices. The async device driver 105 receives data from the UART 101 by reading data from an input/output port on the UART 101. Another input/output port is used by the async device driver 105 to read/write the modem control signals on the UART 101. The async device driver 105 will control the modes of operation of the UART 101 by sending commands to an input/output port. The data normally flows between the system processor 103 where the async device driver 105 is executing and the UART 101 over the system data bus.

When certain events happen (examples will be described below) the UART 101 can generate an interrupt for the system processor 103. The interrupt causes the system processor 103 to give control to the async device driver 105. The async device driver 105 will then be able to determine that the UART 101 wants to be serviced by the async device driver 105.

The arrows going to/from the bottom of the UART 101 in Fig. 1 show how the UART 101 is connected to an external RS232C communications port (not shown). There are separate lines for transmit and receive data as well as lines for every modem control signal. This is conventional and the implementation well-known to those of ordinary skill in the art from a review of Fig. 1.

One command (control commands) that the async device driver can send the UART 101 is to enable or disable the FIFO capabilities of the UART 101. The following describes the operation if the UART 101 FIFO is disabled. To transmit, the async device driver 105 sends one byte (character) of data to the UART 101 to be transmitted. After the UART 101 has transmitted the byte of data, the UART 101 will generate an interrupt for the system processor 103. The async device driver 105 receives the interrupt and provides the next byte to the UART 101 to be transmitted. When the UART 101 receives a byte of data, it will generate an interrupt for the system processor 103. The async device driver 105 receives an interrupt and reads the byte of data from the UART 101.

The async device driver 105 can command the UART 101 to enable its FIFO capabilities. The following discussion assumes a FIFO size of 16 bytes. UARTs can be built with different size FIFOs. To transmit, the async device driver 105 will give 16 bytes of data to the UART 101 to be transmitted. After the UART 101 has transmitted the 16 bytes of data the UART 101 will generate an interrupt for the system processor 103. The async device driver 105 will get the interrupt and give the next 16 bytes to the UART 101 to be transmitted. The async device driver 105 can give less than 16 bytes at a time to the UART 101 and the UART 101 will transmit whatever data it is given. For a receive operation the async device driver 105 commands the UART 101 to generate an interrupt after a certain number of bytes have been received by the UART 101. The selectable number of bytes is also known as the "trigger level". The trigger level is set by the device driver 105 to minimize the number of system processor 103 interrupts while also leaving enough time after the interrupt for the async device driver 105 to read all the data from the receive FIFO before it fills up. The UART 101 will generate an interrupt from the system processor 103 after the trigger level number of bytes have been received by the UART 101 into its receive FIFO. The async device driver 105 gets the interrupt and will read all the bytes from the UART 101 receive FIFO.

The async device driver 105 can read and write the modem control signals. The modem control signals do not directly effect the UART 101 transmit and receive operations. The async device driver 105 interprets and sets these signals. The async device driver 105 also controls the operation of the UART 101 based on the state of the modem control signals. This is how the operation of the UART 101 is indirectly effected by the state of the modem control signals.

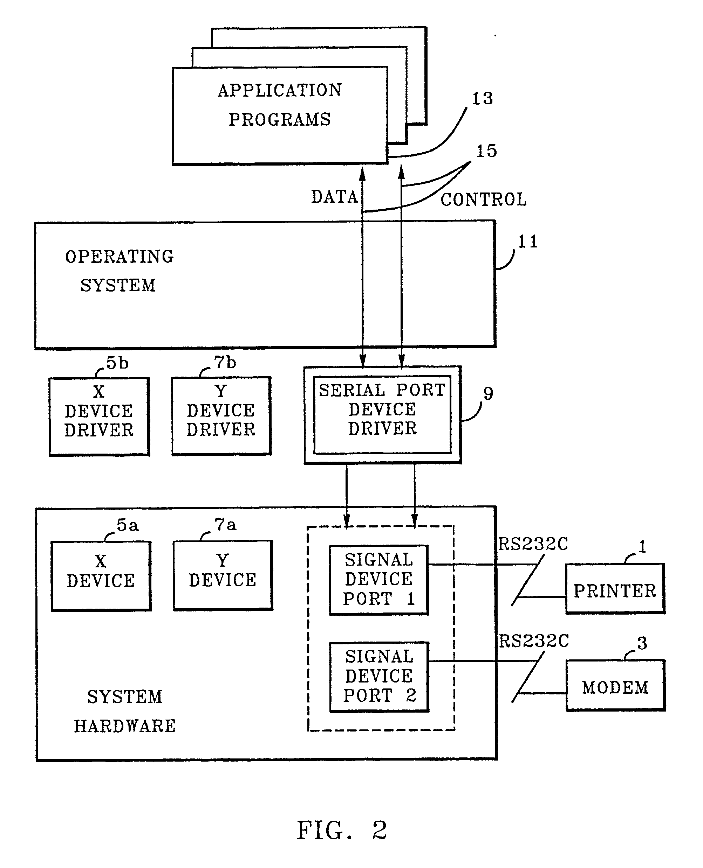

In Fig. 2 there is shown a serial device connected to the system via an IEEE standard RS232C connection or comparable interface. The two example devices shown are a serial printer 1 and a modem 3. The next point to note is that the specific devices 5a and 7a of the system hardware are controlled by their respective device drivers 5b and 7b, the serial port device driver 9 being one of the drivers, and also the focus for the improvement of this disclosure. Above this level resides the operating system 11 and application programs 13. Application programs 13 send and receive data and control information through flow lines 15 to and from the serial port device driver 9 in a conventional and well known manner through the operating system 11.

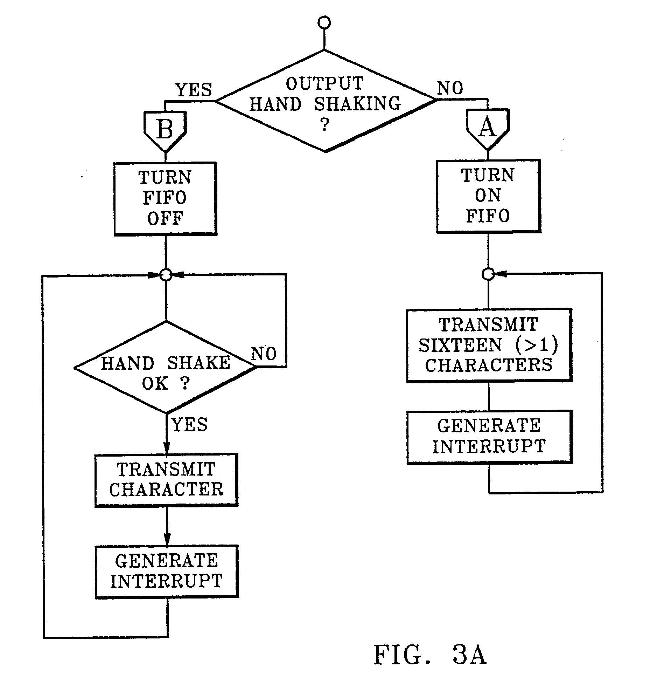

In accordance with Fig. 3A, if output handshaking (as conventionally understood by those of ordinary skill in the art) is disabled at NO on the right hand path of the chart, then the serial device driver (9 at Fig. 2) can turn on the transmit FIFO and transmit multiple characters, i.e., bytes (16 in this example), before generating an interrupt and repeating the loop as shown, the termination of which is event from pseudo code set forth hereinafter in its corresponding "while" statement.

The problem depicted in this diagram is that if output handshaking is enabled at YES on the left hand path of the chart, the device driver must turn the FIFO off to maintain compatibility with the greatest number of existing devices. As is shown in this diagram this causes a single character to be transmitted and then another interrupt must be processed. This creates unnecessary loss of performance in some circumstances, and is the problem solved with this invention.

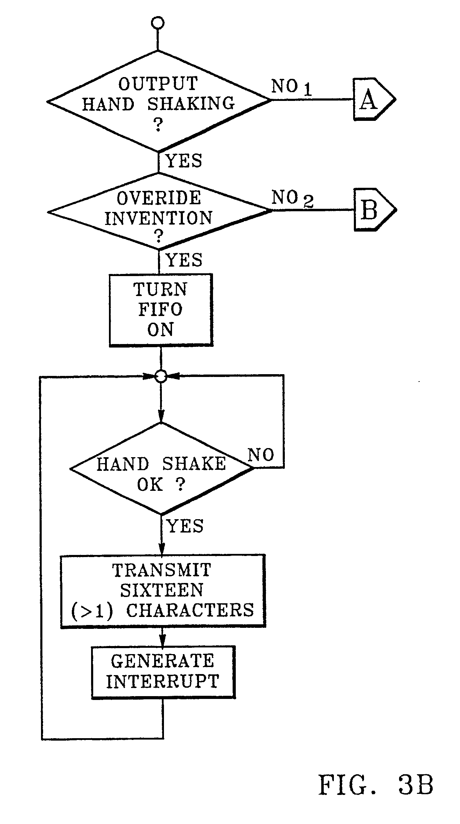

In Fig. 3B, if output handshaking is disabled at NO1 on the right hand path, then the flow is the same as is shown in Fig. 3A. If the override invention is disabled at NO2, by sending a command to the device driver, also on the right hand path, then the driver 9 at Fig. 2 is forced to work on a single character at a time as described in the previous Fig. 3A.

With the override enabled at YES on the left side downward path in Fig. 3B in accordance with the invention, the FIFO can be turned on even though output handshaking is enabled. In this case the device driver 9 in Fig. 2 will be capable of transmitting multiple characters, i.e., bytes (16 in this example), before generating an interrupt and repeating the loop of Fig. 3B. As mentioned in the background discussion of the invention, this is how compatibility is preserved while optimising system performance, and is the essence of this invention.

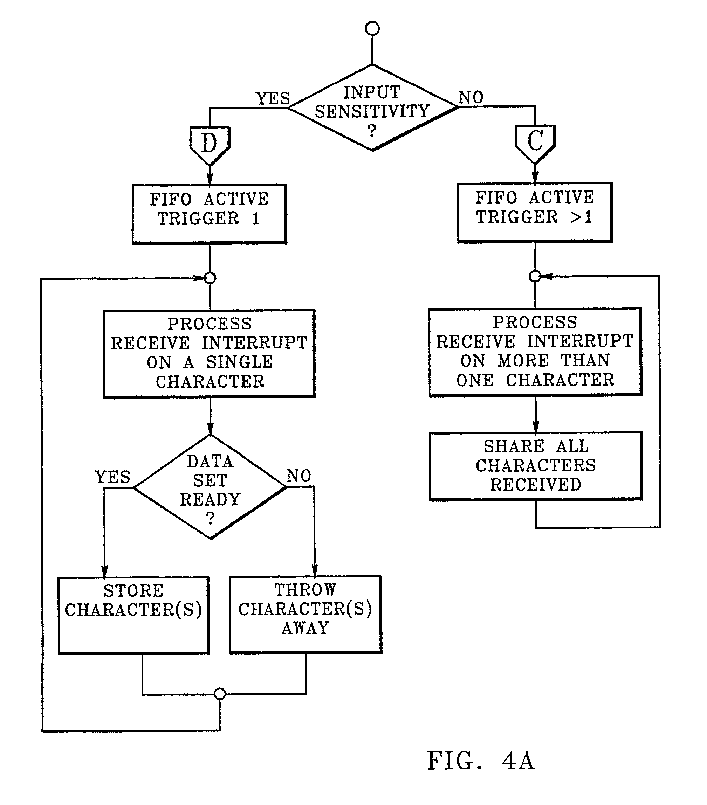

In Fig. 4A, if input sensitivity is disabled at NO on the right side of the path, then the device driver 9 in Fig. 2 can turn on the receive FIFO and receive an interrupt only after more than one character, i.e., byte, has been received; (the number to be received before generating an interrupt is controlled by the device driver by setting the receive FIFO "trigger level"). Once this concept is known, this is implemented in a routine and conventional manner as shown. The termination of the loop is better understood also in pseudo code which follows in its corresponding "while" statement.

The problem depicted in Fig. 4A is that if input sensitivity is enabled at YES on the left side of the path, the receive trigger level must be set to one. As is shown in Fig. 4A this causes an interrupt to be generated for every character. This figure also shows another aspect of this invention. More specifically, even without the override aspect of the invention being active, the receive FIFO will be activated even though the trigger level must be set to one. This takes advantage of the FIFO to avoid loss of a character in cases where the system interrupt latency has exceeded the inter-character arrival rate. By system interrupt latency is meant the time between the time the hardware generates the interrupt and the device driver gets control due to the interrupt.

5

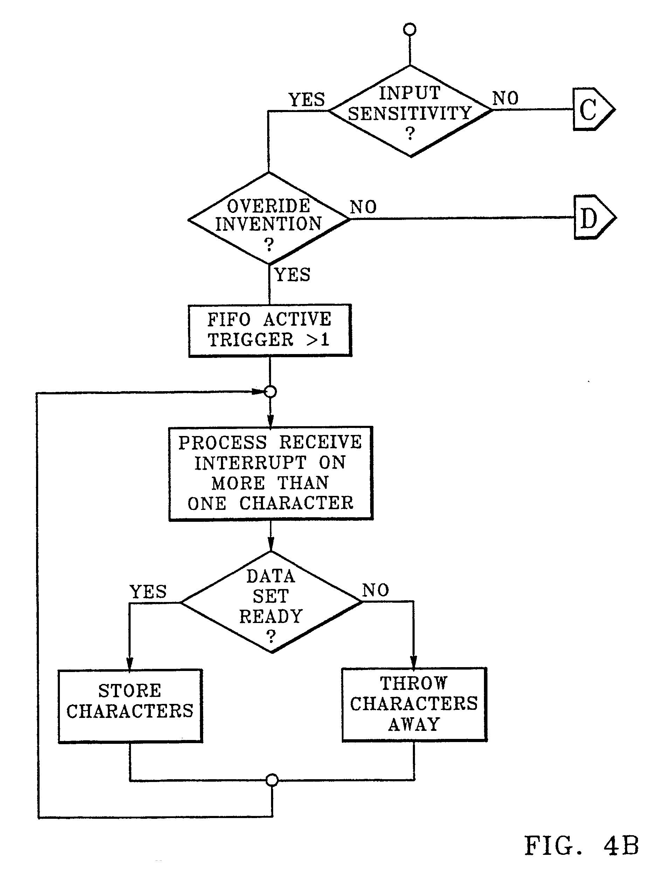

In Fig. 4B, if input sensitivity is enabled at the first YES and the override invention is also enabled at the second YES down the path, then the device driver 9 in Fig. 2 can enable the receive FIFO and set the trigger level at greater than one. In this case the device driver 9 in Fig. 2 will be capable of receiving multiple characters, i.e., bytes (16 in this example), for each interrupt process.

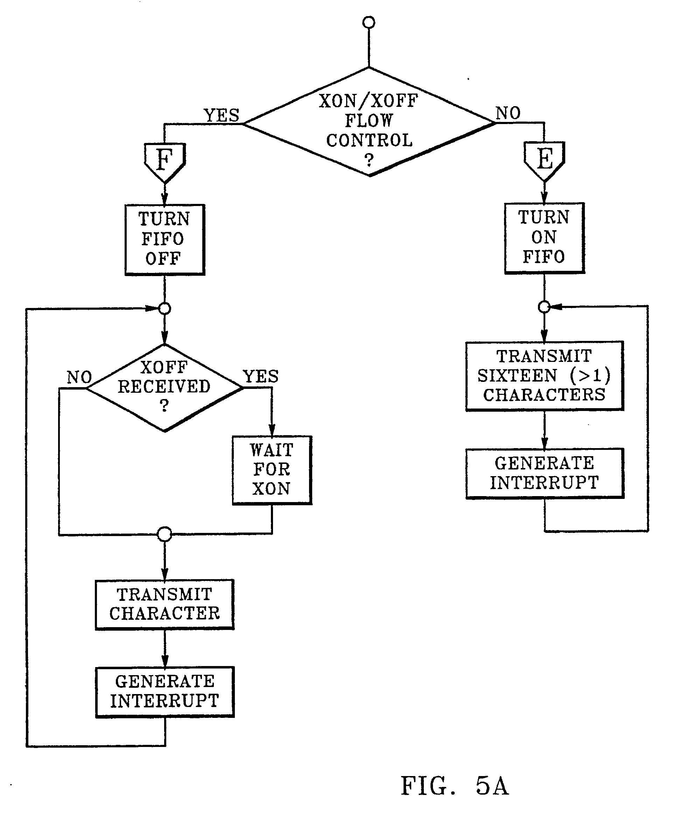

In Fig. 5A, if XON/XOFF flow control is disabled at NO on the right side path of the path, then the device driver 9 in Fig. 2 can turn on the FIFO and transmit multiple characters, i.e., bytes (16 in this example), before generating an interrupt.

The problem depicted in Fig. 5A is that if XON/XOFF flow control is enabled at YES on the left side of the path, then the transmit FIFO must be disabled to preserve compatibility with the maximum number of devices.

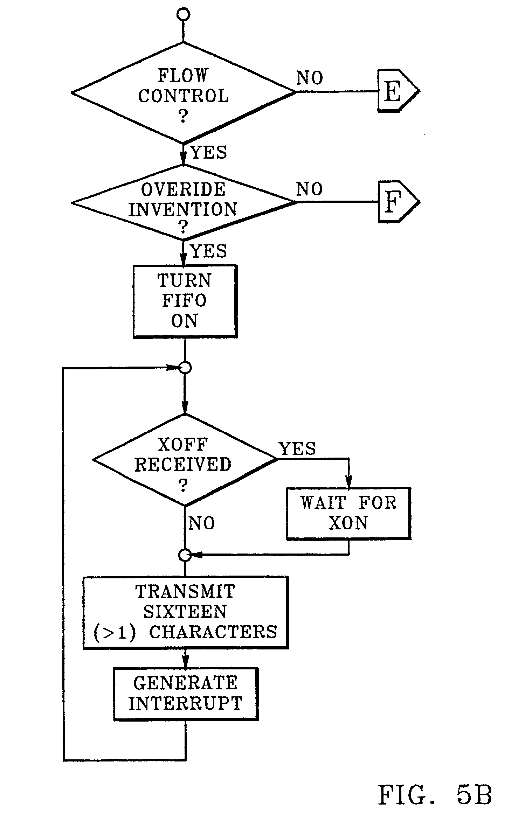

In Fig. 5B, if both flow control and the override feature are enabled, then the device driver 9 in Fig. 2 can enable the FIFO thereby allowing multiple characters, i.e., bytes (16 in this example), to be transmitted for every interrupt which must be processed.

Having described the invention in detail the following are specific pseudo code implementations.

The following implementation is a module representative of the invention as described with reference to Fig. 4A and 4B for input sensitivity control in accordance with the method.

```
if not Input_Sensitivity
 then
Set FIFO ACTIVE with Trigger_Level greater
 than 1
while receiving data
     Process receive interrupt on more than 1
     character
     Store all characters received
```

```
        else
            if Override not enabled
                then
                    Set FIFO ACTIVE with Trigger_Level
                    equal to 1
                    while receiving data
                        Process receive interrupt on a
                        single character if Data_Set_Ready
                            then store character(s)
                            else throw away character(s)
            else
                Set FIFO ACTIVE with Trigger_Level
                greater than 1
                while receiving data
                    Process receive interrupt on more
                    than 1 character if Data_Set_Ready
                        then store characters
                        else throw away characters
```

The following implementation is a module representative of the invention as described with reference to Figs. 3A and 3B for output handshake control in accordance with the method.

```
        if not Output_Handshaking
            then
                Turn FIFO on
                while transmitting data
                    Transmit 16 (>1) characters
                    Generate interrupt
            else
                if Override not enabled
                    then
                        Turn FIFO off
                        while transmitting data
```

```
if Handshake is OK
    then
        Transmit character
        Generate interrupt
else
    Turn FIFO on
    while transmitting data
        if Handshake is OK
            then
                Transmit 16 (>1) characters
                Generate interrupt
```

The following implementation is a module representative of the invention as described with reference to Figs. 5A and 5B for automatic transmit flow control in accordance with the method.

```
if not Flow_Control
    then
        Turn FIFO on
        while transmitting data
            Transmit 16 (>1) characters
            Generate interrupt
    else
        if Override not enabled
            then
                Turn FIFO off
                while transmitting data
                    if XOFF received
                        then wait for XON
                    Transmit character
                    Generate interrupt
            else
                Turn FIFO on
                while transmitting data


                    if XOFF received
                        then wait for XON
                    Transmit 16 (>1) characters
                    Generate interrupt
```

Having described the invention, the same will be more fully understood from the appended claims.

8

**Claims**

1. A computer system comprising:
a serial port for permitting serial input and output of data,
a multi-tasking operating system (11) for generating interrupts to drive the serial port,
means (9) for conducting the input and output of data including processing means for providing controlled buffering of the input and output of data;
characterised in that the means (9) further comprises:
disabling means for selectively disabling the controlled buffering by the processing means whereby rate of data input and output can be increased to a peripheral connectable to the system having extended serial buffering capability greater than the buffering capability of the processing means which is connected to the means (9) for conducting input and output of data when the peripheral is connected thereto.

2. A computer system comprising:
a serial port for permitting serial input and output of data,
a multi-tasking operating system (11) for generating interrupts to drive the serial port,
means (9) for conducting the input and output of data including processing means for providing controlled buffering of the input and output of data;
characterised in that the means (9) further comprises:
enabling means for enabling buffering by the processing means by setting a predetermined interrupt trigger level equivalent to single character processing to reduce the probability of data loss during increase interrupt latency conditions.

3. In or for a computer system comprising: a serial port for permitting serial input and output of data, a multi-tasking operating system (11) for generating interrupts to drive the serial port, and means (9) for conducting the input and output of data including processing means for providing controlled buffering of the input and output of data;
a method for conducting the data input and output comprising the steps of:
disabling the controlled buffering provided by the processing means;
conducting a test output of serial data to a predetermined connectable peripheral for determining if the connectable peripheral when connected is capable of extended serial data buffering greater than the buffering capabilities of the processing means; and
one of re-enabling the buffering control if the capabilities of the peripheral to perform extended serial data buffering is about equal to or less than the buffering capabilities of the processing means,
or maintaining the disabled buffering control if the capabilities of the connectable peripheral to perform extended serial data is buffering greater than the buffering capabilities of the processing means.

4. A method of conducting input/output of data in a serial manner, in a multi-tasking operating system (11) which employs interrupts of data to drive a serial port, wherein the input/output of data is controlled by controlled buffering by processing means controlling the input/output of data, comprising the steps of:
disabling the controlled buffering by the processing means;
conducting a test output of serial data to a predetermined connectable peripheral to determine if the connectable peripheral when connected is capable of extended serial data buffering greater than the buffering capabilities of the processing means; and
one of re-enabling the buffering control if the capabilities of the peripheral to perform extended serial data buffering is about equal to or less than the buffering capabilities of the processing means, or maintaining the disabled buffering control if the capabilities of the connectable peripheral to perform extended serial data is buffering greater than the buffering capabilities of the processing means.

5. A method as claimed in claim 3 or claim 4 further comprising the step of maintaining the disabled control only to a level sufficient to prevent overflow of a connected peripheral device buffer.

6. In a computer system having means (9) for conducting input/output of data in a serial manner, the computer system controlled by a multi-tasking operating system (11) which employs interrupts to drive a serial port, and wherein the means (9) for conducting input/output of data further comprises processing means for controlled buffering of input/output of data, the improvement comprising:
disabling means for selectively disabling the controlled buffering by the processing means whereby input/output rate of data can be increased to a peripheral connectable to the system having extended serial buffering capability greater than the buffering capability of the processing means which is connected to the means for conducting input/output of data when the peripheral is connected thereto.

7. In a computer system having means (9) for conducting input/output of data in a serial manner, the computer system controlled by multi-tasking operating system (11) which employs interrupts to drive a serial port, and wherein the means (9) for conducting input/output of data further comprises processing means for controlled buffering of input/output of data, the improvement comprising:

enabling means for enabling buffering by the processing means by setting a predetermined interrupt trigger level equivalent to single character processing to reduce the probability of data loss during increase interrupt latency conditions.

SYSTEM
PROCESSOR
103

105

ASYNC DEVICE DRIVER

TRANSMIT
DATA
RECEIVE
DATA
CONTROL
COMMANDS
INTERRUPT
MODEM
CONTROL
SIGNALS

109

101

| 16 BYTE TRANSMIT FIFO | 16 BYTE RECEIVE FIFO | UART |
|---|---|---|

DATA CARRIER DETECT

DATA SET READY

CLEAR TO SEND

RING INDICATOR

DATA TERMINAL READY

REQUEST TO SEND

RECEIVE FROM RS232C INTERFACE

TRANSMIT TO RS232C INTERFACE

FIG. 1

FIG. 2

FIG. 3A

13

FIG. 3B

FIG. 4A

FIG. 4B

FIG. 5A

FIG. 5B